# EUROPÄISCHE PATENTANMELDUNG

(11) **EP 0 923 254 A2**
(43) Veröffentlichungstag der Anmeldung: **16.06.1999**
(21) Anmeldenummer: 98440268.5
(22) Anmeldetag: 20.11.1998
(51) Int. Cl.: H04Q 3/00

(54) **Verfahren zur Beschaffung von Instruktionen bezüglich eines Zielteilnehmers in einem Telekommunikationsnetz und Knotenpunkte hierfür**

(30) Priorität: 10.12.1997 DE 19754782
(71) Anmelder: ALCATEL, 75008 Paris (FR)
(72) Erfinder: Weik, Hartmut, 70195 Stuttgart (DE); Lautenschlager, Wolfgang, 71287 Weissach-Flacht (DE)
(74) Vertreter: Brose, Gerhard, Dipl.-Ing.

(57) **Zusammenfassung**

Die vorliegende Erfindung betrifft ein Verfahren zur Beschaffung von Instruktionen über einen Zielteilnehmer in einem Telekommunikationsnetz, der nicht über eine an einem Quell-Endgerät (TSRC) gewählte Teilnehmernummer erreichbar ist, sowie Knotenpunkte (XSRC, XDEST) hierfür, wobei bei dem Verfahren durch die Wahl der Teilnehmernummer an dem Quell-Endgerät eine Verbindung (CON1, CON2) von diesem Quell-Endgerät über einen ersten Knotenpunkt (XSRC), der mit einer intelligenten Netzwerkeinrichtung (SCP) verbindbar ist, zu einem zweiten Knotenpunkt (XDEST) aufgebaut wird. Es wird vorgeschlagen, daß der zweite Knotenpunkt dem ersten Knotenpunkt eine Meldenachricht darüber sendet, daß die gewünschte Teilnehmernummer nicht erreichbar ist, daß die Verbindung auf einem Abschnitt (CON2) bis zu dem ersten Knotenpunkt ausgelöst wird, daß der erste Knotenpunkt nach Erhalt der Meldenachricht bei der intelligenten Netzwerkeinrichtung Instruktionen bezüglich des über die gewählte Teilnehmernummer nicht erreichbaren Zielteilnehmers erfragt und daß anhand der Instruktionen dem Quell-Endgerät eine Sprachansage zuführt oder daß die Instruktionen für die Tarifierung ausführt.

## Beschreibung

Die vorliegende Erfindung betrifft ein Verfahren zur Beschaffung von Instruktionen bezüglich eines Zielteilnehmers in einem Telekommunikationsnetz, sowie einen Knotenpunkt hierfür gemäß dem Oberbegriff des Anspruchs 5 und einen Knotenpunkt hierfür gemäß dem Oberbegriff des Anspruchs 6.

Durch Umzug eines Teilnehmers ist es in einem Telekommunikationsnetz immer wieder erforderlich, daß dem Teilnehmer eine neue Teilnehmernummer zugewiesen wird, weil der Teilnehmer nicht mehr über die alte Teilnehmernummer der bisherigen Teilnehmeranschlußleitung seines bisherigen Wohnortes erreichbar ist, sondern über seine neue Teilnehmernummer an seinem neuen Wohnort. Auch die Deregulierung des Telekommunikationsmarktes kann es mit sich bringen, daß ein Teilnehmer, der seinen Service-Provider wechselt, nicht in jedem Falle seine bisherige Teilnehmernummer beibehalten kann. Damit ein Anrufer, der den umgezogenen Teilnehmer unter seiner bisherigen Teilnehmernummer anruft und dessen Ruf deshalb bis zu einer Ortsvermittlungsstelle des bisherigen Wohnortes aufgebaut wird, nicht mehrfach vergeblich versucht, unter der alten Teilnehmernummer anzurufen, wird von dieser Ortsvermittlungsstelle eine Ansage angeschaltet, die dem Anrufer zumindest mitteilt, daß der angerufene Teilnehmer unter der gewählten Teilnehmernummer nicht erreichbar ist.

Vorteilhafter Weise wird dem Anrufer bei seinem Ruf unter der alten Teilnehmernummer auch die neue Teilnehmernummer des angerufenen Teilnehmers mitgeteilt. Wie aus dem Artikel "Automatische, rechnergesteuerte Ansage geänderter Rufnummern in konventionellen Vermitttlungssystemen" von Dieter Humboldt, Mitarbeiter im FTZ Darmstadt, erschienen in der Revue F.I.T.C.E (Jan.-Feb. 1977, Band 16, Heft Nr.1, Seite 1-6, ISSN: 0304-4416) bekannt, verbindet die Ortsvermittlungsstelle des bisherigen Wohnortes zur Ansage der neuen Teilnehmernummer den Ruf an eine zentrale Ansagestelle weiter, die anhand der bisherigen Teilnehmernummer die neue Teilnehmernummer ermittelt und mittels einer automatischen Sprachgenerierung ansagt. Die Ansage wird dann von der zentralen Ansagestelle über die Ortsvermittlungsstelle zu dem Anrufer übertragen. Im einfachsten Fall befinden sich der Teilnehmeranschluß des Anrufers und die nicht erreichbare Teilnehmernummer im Wirkungsbereich derselben Ortsvermittlungsstelle, so daß außer der Ortsvermittlungsstelle nur die Leitungswege vom Anrufer zur Ortsvermittlungsstelle weiter zur zentralen Ansagestelle durch diesen Ruf und die Ansage der neuen Teilnehmernummer belastet werden. Häufig jedoch wird der Anrufer von einem weiter entfernten Ort aus anrufen und dann mehrere Knotenpunkte und einen längeren Leitungsweg, eventuell auch im Fernverkehrsbereich beanspruchen. Der Verfasser des genannten Artikels weist deshalb daraufhin, daß der Anrufer die Ansage einer geänderten Teilnehmernummer im Fernverkehr nur über einen begrenzten Zeitraum gebührenfrei anhören kann.

Zur Behandlung eines Rufes zu einem nicht unter der gewählten Teilnehmernummer erreichbaren Teilnehmer werden in der Europäischen Patentanmeldung EP 0 753 975 A2 anstelle der zentralen Ansagestelle Komponenten eines Intelligenten Netzes eingesetzt. Wenn ein Anrufer eine Teilnehmernummer an seinem Endgerät eingibt, wird der Ruf über eine Quellvermittlungsstelle und zu einem SSP-Knotenpunkt (SSP = Service Switching Point) aufgebaut. Der SSP-Knotenpunkt prüft dann mit Hilfe einer Rufnummernliste, ob der gewünschte Teilnehmer unter der gewählten Teilnehmernummer erreichbar ist oder ob dieser eine neue Teilnehmernummer erhalten hat. Hat der gewünschte Teilnehmer eine neue Teilnehmernummer, so fragt der SSP-Knotenpunkt bei einem SCP-Knotenpunkt (SCP = Service Control Point) nach Instruktionen, wie der Ruf weiterzubehandeln ist. Gemäß dieser Instruktionen baut der SSP-Knotenpunkt entweder eine Verbindung von dem Anrufer weiter zu einem Endgerät mit der neuen Teilnehmernummer auf oder spielt mit Hilfe eines sogenannten Intelligenten Prozessors - gemeint ist wohl eine Intelligente Peripherie - dem Anrufer eine Ansage ab, die über die neue Teilnehmernummer informiert. Bei diesem Verfahren muß der SSP-Knotenpunkt bei jedem Ruf ermitteln, ob der gewünschte Teilnehmer über die gewählte Teilnehmernummer erreichbar ist. Außerdem muß in dem SSP-Knotenpunkt stets eine auf den neuesten Stand gebrachte Rufnummernliste geänderter Teilnehmernummern verfügbar sein. Da in einem Telekommunikationsnetz üblicherweise zahlreiche SSP-Knotenpunkte vorhanden sind, entsteht bei der Pflege der Rufnummernlisten ein nicht unerheblicher Aufwand.

Alternativ wird in der genannten Europäischen Patentanmeldung vorgeschlagen, die Rufnummernliste in dem SCP-Knotenpunkt abzulegen. Dann muß der SSP-Knotenpunkt bei jedem weiterzuverarbeitenden Ruf zunächst eine Anfrage bezüglich der gewählten Teilnehmernummer an den SCP-Knotenpunkt senden, um zu erfahren, ob die Teilnehmernummer sich geändert hat oder nicht und in welcher Weise bei einer geänderten Teilnehmernummer zu verfahren ist. Bei den meisten Rufen ist jedoch die gewählte Teilnehmernummer die aktuelle Teilnehmernummer des gewünschten Teilnehmers, so daß durch die regelmäßigen Anfragen bei dem SCP-Knotenpunkt ein beträchtlicher Datenverkehr entsteht.

Aufgabe der Erfindung ist es, auf einfache Weise einen Ruf zu einem Zielteilnehmer weiterzuverarbeiten, der mit einer an einem Endgerät gewählten Teilnehmernummer nicht erreichbar ist.

Diese Aufgabe wird durch ein Verfahren gemäß der technischen Lehre des Anspruchs 1, durch einen Knotenpunkt gemäß der technischen Lehre des Anspruchs 5 und durch einen Knotenpunkt gemäß der technischen Lehre des Anspruchs 6 gelöst. Weitere vorteilhafte Ausgestaltungen der Erfindung sind den abhängigen Ansprüchen und der Beschreibung zu entnehmen.

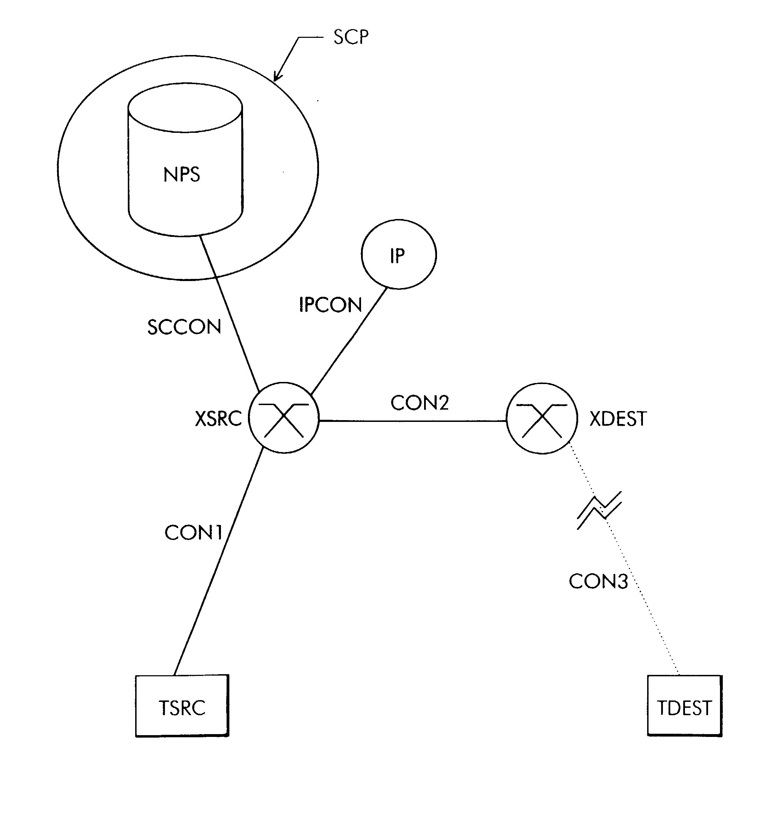

Im folgenden werden die Erfindung und ihre Vorteile anhand eines Ausführungsbeispiels unter Zuhilfenahme der Zeichnungen dargestellt.
- Die Figur: zeigt ein Beispiel einer Anordnung zur Ausführung des erfindungsgemäßen Verfahrens aus einem erfindungsgemäßen ersten Knotenpunkt, einem erfindungsgemäßen zweiten Knotenpunkt, einem Endgerät und einer intelligenten Netzwerkeinrichtung.

In der Figur ist eine Anordnung dargestellt, mit der das erfindungsgemäße Verfahren ausgeführt werden kann. Ein Quell-Endgerät TSRC kann über einen Verbindungsabschnitt CON1 zu einem erstem Knotenpunkt XRSC, im folgenden als Quellvermittlungsstelle XSRC bezeichnet, und weiter über einen Verbindungsabschnitt CON2 mit einem zweitem Knotenpunkt XDEST verbunden werden, der im folgenden als Zielvermittlungsstelle XDEST bezeichnet wird. Sowohl der Verbindungsabschnitt CON1 als auch der Verbindungsabschnitt CON2 sind jeweils Teile eines nicht detailliert dargestellten Telekommunikationsnetzes und können daher jeweils in weitere nicht dargestellte Verbindungsunterabschnitte unterteilt sein und über weitere Einrichtungen des Telekommunikationsnetzes führen, wie z.B. über weitere Knotenpunkte oder Multiplexer und Demultiplexer. Das nicht dargestellte Telekommunikationsnetz kann aus mehreren Teil netzen gebildet werden, z.B. aus einem leitungsgebundenen Netz und einem Mobilfunknetz, die miteinander verbunden sind.

Die Quellvermittlungsstelle XSRC kann SSP-Funktionen (SSP = Service Switching Point) erbringen und deshalb eine Verbindung SCCON zu einer Datenbank NPS (NPS = Number Portability Server) aufbauen, die alte sowie neue Teilnehmernummern von Teilnehmern enthält, deren Teilnehmernummern sich geändert haben. Eine solche Teilnehmernummernänderung kann, wie eingangs erwähnt, aufgrund eines Umzuges eines Teilnehmers oder aufgrund eines Wechsels zu einem anderen Service-Provider in der Datenbank NPS eingetragen sein. Es ist aber auch möglich, daß eine Teilnehmernummernänderung zu einer anderen Teilnehmernummer nur temporär eingetragen ist, z.B. weil eine Teilnehmernummer für die Zeit einer Urlaubsreise an einen Teilnehmeranschluß am Urlaubsort portiert ist oder für die Zeit eines Ausfalls einer Teilnehmervermittlungsstelle an einen Teilnehmeranschluß einer alternativen Teilnehmervermittlungsstelle. Die Datenbank NPS ist Teil eines SCP-Knotenpunktes SCP, der SCP-Funktionen (SCP = Service Control Point) leistet. Erfindungsgemäß enthält die Datenbank NPS zusätzlich noch weitere, im folgenden näher erläuterte Instruktionen zu diesen Teilnehmern. Außerdem kann die Quellvermittlungsstelle XSRC über eine Verbindung IPCON bei einer Intelligenten Einrichtung IP (IP = Intelligent Peripheral) Dienstfunktionen abrufen, wie z.B. eine Sprachansagefunktion oder eine Spracherkennungsfunktion. Die SSP-Funktionen und die SCP-Funktionen können auch gemeinsam von einem einzigen Knotenpunkt erbracht werden, der dann als SSCP-Knotenpunkt (SSCP = Service Switching and Control Point) bezeichnet wird. In diesem Fall wäre dann die Quellvermittlungsstelle XSRC und der SCP-Knotenpunkt SCP eine einzige zusammengefaßte Einrichtung. Es ist auch möglich, die Datenbank NPS in die Quellvermittlungsstelle XSRC einzubauen, so daß die Verbindung SCCON zu dem SCP-Knotenpunkt SCP entfallen kann.

Wenn nun ein Anrufer mit dem Quell-Endgerät TSRC einen Zielteilnehmer anrufen will und davon ausgeht, daß ein Ziel-Endgerät TDEST des Zielteilnehmers über eine Teilnehmernummer an der Zielvermittlungsstelle XDEST erreichbar ist, so wählt der Anrufer an dem Quell-Endgerät TSRC diese Teilnehmernummer, die im folgenden als "alte Teilnehmernummer" bezeichnet wird. Nach dem Wählen der alten Teilnehmernummer an dem Quell-Endgerät TSRC wird eine Verbindung über einen Verbindungsabschnitt CON1 zu einer Quellvermittlungsstelle XSRC und weiter über einen Verbindungsabschnitt CON2 zu einer Zielvermittlungsstelle XDEST aufgebaut. Der Zielteilnehmer ist jedoch nicht mehr über die alte Teilnehmernummer erreichbar, da er z.B. seinen Wohnort gewechselt hat und fortan über eine nicht dargestellte weitere Zielvermittlungsstelle erreicht werden kann. Die nicht mehr vorhandene oder unbeschaltete Teilnehmeranschlußleitung zwischen der Zielvermittlungsstelle XDEST und dem Ziel-Endgerät TDEST ist deshalb durch einen unterbrochenen und gestrichelt dargestellten Verbindungsabschnitt CON3 angedeutet.

Die Zielvermittlungsstelle XDEST erkennt den Zustand, daß der Verbindungsabschnitt CON3 nicht aufgebaut werden kann, und versendet eine Meldenachricht über diesen Zustand an die Quellvermittlungsstelle XSRC. Daraufhin wird der Verbindungsabschnitt CON2 ausgelöst. Zur Übertragung der Meldenachricht wird vorteilhafter Weise eine Auslösenachricht aus dem sogenannten "Zentralen Zeichengabesystem Nr.7" mitbenutzt, wie sie zum Auslösen des Verbindungsabschnittes CON2 verwendet wird. Die Auslösenachricht wird auf einem in der Figur nicht dargestellten Zeichengabekanal zwischen der Zielvermittlungsstelle XDEST und der Quellvermittlungsstelle XSRC übermittelt. In dieser Auslösenachricht kann die Meldenachricht als Grund des Auslösens eingetragen werden. Ein solcher Grund wäre z.B. "unallocated number", der lediglich anzeigt, daß die gewählte Teilnehmernummer nicht erreichbar ist. Es kann aber auch eine Meldenachricht eigens definiert werden, die dann z.B. "subscriber number changed" lauten könnte und bereits daraufhin weist, daß sich die Teilnehmernummer des Zielteilnehmers geändert hat. Nach dem Auslösen ist der Verbindungsabschnitt CON2 für andere Verbindungen wieder frei, die zwischen der Quellvermittlungsstelle XSRC und der Zielvermittlungsstelle XDEST für in der Figur nicht dargestellte Teilnehmerendgeräte aufgebaut werden können.

Die Quellvermittlungsstelle XSRC empfängt und liest die Meldenachricht und sendet daraufhin an den SCP-Knotenpunkt SCP eine Anfrage, in der die gewählte alte Teilnehmernummer des Zielteilnehmers angegeben ist und in der Instruktionen bezüglich der alten Teilnehmernummer erfragt werden. Wenn die Anfrage sich auf eine alte Teilnehmernummer eines Teilnehmers bezieht, dessen Teilnehmernummer sich geändert hat, ermittelt der SCP-Knotenpunkt SCP dann mit der alten Teilnehmernummer als Suchkriterium in seiner Datenbank NPS einen Eintrag, in dem Instruktionen unter dieser Teilnehmernummer angegeben sind. Der Eintrag mit den Instruktionen wird von dem SCP-Knotenpunkt SCP an die Quellvermittlungsstelle XSRC übermittelt. Üblicherweise enthält der Eintrag eine neue Teilnehmernummer des Zielteilnehmers und eine Instruktion, den Ruf von dem Quell-Endgerät TSRC an einen in der Figur nicht dargestellten Teilnehmeranschluß mit der neuen Teilnehmernummer des Zielteilnehmers aufzubauen. Erfindungsgemäß enthält der Eintrag jedoch zusätzlich oder auch anstatt dieser genannten Instruktion zum Rufaufbau eine Instruktion, dem Quell-Endgerät TSRC eine Sprachansage zuzuspielen. In der Sprachansage kann dem Anrufer z.B. mitgeteilt werden, wie die neue Teilnehmernummer des Zielteilnehmers lautet, so daß bei einem Folgeruf die neuen Teilnehmernummer verwendet werden kann. Es kann in der Sprachansage auch angegeben werden, mit welchen zusätzlichen Kosten der Anrufer zu rechnen hat, wenn er sich zu dem Teilnehmeranschluß mit der neuen Teilnehmernummer des Zielteilnehmers weiterverbinden läßt.

Die Sprachansage an das Quell-Endgerät TSRC kann die Quellvermittlungsstelle XSRC z.B. mittels eines in der Quellvermittlungsstelle XSRC eingebauten Sprachprozessors lokal erzeugen und über den Verbindungsabschnitt CON1 dem Quell-Endgerät TSRC zuspielen. Es ist aber auch möglich, daß die Quellvermittlungsstelle XSRC dazu auf die Sprachansagefunktion der Intelligenten Einrichtung IP zugreift. Die für die Sprachansage erforderlichen Daten werden dann gemäß den Sprachansage-Instruktionen von der Quellvermittlungsstelle XSRC an die Intelligente Einrichtung IP versandt, die daraufhin eine den Instruktionen entsprechende Sprachansage generiert. Diese Sprachansage wird über die Verbindung IPCON und den Verbindungsabschnitt CON1 dem Quell-Endgerät TSRC zugeführt. In der Sprachansage kann dem Anrufer z.B. mitgeteilt werden, daß der Zielteilnehmer keine neue Teilnehmernummer erhalten hat, oder aber die neue Teilnehmernummer des Zielteilnehmers, die der Anrufer bei einem Folgeanruf statt der alten Teilnehmernummer unmittelbar verwenden kann. Abhängig von den Instruktionen aus der Datenbank NPS kann dann die Quellvermittlungsstelle XSRC den Ruf von dem Quell-Endgerät TSRC nach der Sprachansage beenden oder an einen Teilnehmeranschluß mit der neuen Teilnehmernummer des Zielteilnehmers aufbauen. Der Ruf zu der neuen Teilnehmernummer kann entweder automatisch aufgebaut werden oder erst nach einer Rückfrage bei dem Anrufer und einer Bestätigung des Rufwunsches durch den Anrufer.

Es ist jedoch möglich, daß der Anrufer eine Teilnehmernummer gewählt hat, für die kein Eintrag in der Datenbank NPS vorhanden ist, z.B. weil sich der Anrufer verwählt hatte und deshalb irrtümlich der Verbindungsabschnitt CON2 zu der Zielvermittlungsstelle XDEST aufgebaut worden war. Auch in diesem Fall sendet die Zielvermittlungsstelle XDEST eine Meldenachricht an die Quellvermittlungsstelle XSRC, z.B. die erwähnte Auslösenachricht mit dem Grund des Auslösens "unallocated number". Daraufhin fragt die Quellvermittlungsstelle XSRC den SCP-Knotenpunkt SCP nach Instruktionen bezüglich der gewählten Teilnehmernummer und bekommt von diesem eine Mitteilung, daß in der Datenbank NPS kein Eintrag zu dieser Teilnehmernummer existiert. Die Quellvermittlungsstelle XSRC generiert dann selbständig mittels eines eingebauten Sprachprozessors eine Sprachansage für das Quell-Endgerät TSRC, die z.B. "Kein Anschluß unter dieser Nummer" lauten kann.

Es ist auch möglich, daß der SCP-Knotenpunkt SCP der Quellvermittlungsstelle XSRC auch bei einem nicht vorhandenem Eintrag in der Datenbank NPS statt der Mitteilung, daß in der Datenbank NPS kein Eintrag zu dieser Teilnehmernummer existiert, eine detaillierte Instruktionen für die Sprachansage zusendet, in denen bereits der Inhalt der zu leistenden Sprachansage angegeben ist. Die Quellvermittlungsstelle XSRC kann dann die Sprachansagefunktion der Intelligenten Einrichtung IP nutzen und braucht keinen eingebauten Sprachprozessor.

Für die Sprachansage wird erfindungsgemäß nur der Verbindungsabschnitt CON1, allenfalls noch die Verbindung IPCON beansprucht, da nicht die Zielvermittlungsstelle XDEST sondern die Quellvermittlungsstelle XSRC für die Sprachansage sorgt und deshalb der Verbindungsabschnitt CON2 bereits vor der Sprachansage ausgelöst werden kann. Besonders vorteilhaft erweist sich die Anwendung der Erfindung, wenn die Quellvermittlungsstelle XSRC und die Zielvermittlungsstelle XDEST weit voneinander entfernt sind, da dann eine große Übertragungskapazität des Telekommunikationsnetzes, insbesondere lange Übertragungswege und zahlreiche Knotenpunkte durch die Sprachansage über den Verbindungsabschnitt CON2 belastet werden. Eine solche Konstellation ist insbesondere dann gegeben, wenn die Quellvermittlungsstelle XSRC zugleich als Ortsvermittlungsstelle dient und damit der Verbindungsabschnitt CON1 besonders kurz ist. Aber auch dann, wenn der Quellvermittlungsstelle XSRC noch eine in der Figur nicht dargestellte Ortsvermittlungsstelle auf dem Verbindungsabschnitt CON1 vorgeschaltet ist, wird erfindunsgemäß nur ein möglichst kleiner Teil des Telekommunikationsnetzes durch die Sprachansage beansprucht, da weder der Verbindungsabschnitt CON2 noch die Zielvermittlungsstelle XDEST durch die Sprachansage belastet wird.

Weiterhin muß nicht die Quellvermittlungsstelle XSRC bei jedem Ruf, den sie weiteraufbauen soll, anhand einer Datenbankabfrage vorab prüfen, ob die gewählte Teilnehmernummer noch aktuell ist oder ob sie sich geändert hat. So kann jeder Ruf von der Quellvermittlungsstelle XSRC ohne Zeitverzug wegen einer Datenbankabfrage aufgebaut werden und nur in einer Minderzahl der Fälle wird es nötig sein, daß der aufzubauende Ruf von der Zielvermittlungsstelle XDEST wegen einer nicht mehr erreichbaren Teilnehmernummer ausgelöst werden muß und eine Datenbankabfrage in der Datenbank NPS erforderlich ist.

Außerdem kann die eingangs erwähnte zentrale Ansagestelle entfallen oder es kann auf einen in der Quellvermittlungsstelle XSRC eingebauten Sprachprozessor verzichtet werden, da die in einem Intelligenten Netzwerk ohnehin meist vorhandenen Einrichtungen, wie z.B. die Intelligente Einrichtung IP, für den Ansagedienst erfindungsgemäß genutzt werden können.

Neben den Instruktionen für eine Sprachansage kann die Datenbank NPS auch Instruktionen für eine Tarifierung des Rufes von dem Quell-Endgerät TSRC zu der neuen Teilnehmernummer des Zielteilnehmers oder auch für eine Tarifierung der Sprachansage enthalten. Diese Tarif-Instruktionen können von der Quellvermittlungsstelle XSRC bei der Datenbank NPS des SCP-Knotenpunktes SCP abgefragt werden. Die Quellvermittlungsstelle XSRC führt dann die Tarif-Instruktionen aus, indem sie z.B. Gebühreninformationen gemäß den Tarif-Instruktionen erzeugt und an eine in der Figur nicht dargestellte Gebühren-Berechnungsstelle versendet. So können z.B. die für die Sprachansage anfallenden Kosten dem Teilnehmeranschluß des Zielteilnehmers zugerechnet werden, während die Gebühren für einen anschließenden Ruf zu dem Zielteilnehmer dem Teilnehmeranschluß des Anrufers belastet werden.

Es ist aber auch möglich, daß die Datenbank NPS nur Tarif-Instruktionen enthält und keine Sprachansage-lnstruktionen. In diesem Fall würde die Quellvermittlungsstelle XSRC bei einem Ruf zu einem Zielteilnehmer, der nicht mehr unter seiner alten Teilnehmernummer sondern unter einer neuen Teilnehmernummer erreichbar ist, neben der neuen Teilnehmernummer nur die Tarif-Instruktionen erfragen und anschließend umsetzen. Z.B. könnte die Gebührenberechnung des Rufes an die neue Teilnehmernummer auf den Teilnehmeranschluß des Anrufers und auf den Teilnehmeranschluß des Zielteilnehmers aufgeteilt werden, weil der Ruf an die alte Teilnehmernummer des Zielteilnehmers geringere Gebühren verursacht hätte als es der Ruf an die neue Teilnehmernummer tut. Die Quellvermittlungsstelle XSRC erzeugt, wie bereits beschrieben, Gebühreninformationen und versendet diese an eine in der Figur nicht dargestellte Gebühren-Berechnungsstelle. Weiterhin kann die Quellvermittlungsstelle XSRC die Gebühreninformationen auch an das Quell-Endgerät TSRC übertragen, z.B. indem sie eine Sprachansage unter Mitwirkung der Intelligenten Einrichtung IP generiert und dem Quell-Endgerät TSRC zuführt.

Wenn das Quell-Endgerät TSRC und die Quellvermittlungsstelle XSRC über ein ISDN-Telekommunikationsnetz miteinander verbunden sind, kann die Quellvermittlungsstelle XSRC die Gebühreninformationen auch im Rahmen einer Daten-Signalisierung an das Quell-Endgerät TSRC versenden, wie sie das DSS1-Protokoll für ISDN-Telekommunikationsnetze anbietet. Die Quellvermittlungsstelle XSRC kann dann die Gebühreninformation z.B. an einer Anzeigevorrichtung dem Anrufer anzeigen.

## Patentansprüche

1. Verfahren zur Beschaffung von Instruktionen über einen Zielteilnehmer in einem Telekommunikationsnetz, der nicht mehr über eine an einem Quell-Endgerät (TSRC) gewählte Teilnehmernummer erreichbar ist, wobei bei dem Verfahren durch die Wahl der Teilnehmernummer an dem Quell-Endgerät (TSRC) eine Verbindung (CON1, CON2) von diesem Quell-Endgerät (TSRC) über einen ersten Knotenpunkt (XSRC), der mit einer intelligenten Netzwerkeinrichtung (SCP) verbindbar ist, zu einem zweiten Knotenpunkt (XDEST) aufgebaut wird, mit den Schritten
- der zweite Knotenpunkt (XDEST) sendet dem ersten Knotenpunkt (XSRC) eine Meldenachricht, daß die gewünschte Teilnehmernummer über den zweiten Knotenpunkt (XDEST) nicht erreichbar ist,
- die Verbindung (CON1, CON2) auf dem Abschnitt (CON2) von dem zweiten Knotenpunkt (XDEST) bis zu dem ersten Knotenpunkt wird ausgelöst,
- der erste Knotenpunkt (XSRC) erfragt nach Erhalt der Meldenachricht bei der intelligenten Netzwerkeinrichtung (SCP) Instruktionen bezüglich des über die gewählte Teilnehmernummer nicht erreichbaren Zielteilnehmers,
- die intelligente Netzwerkeinrichtung (SCP) überträgt die erfragten Instruktionen an den ersten Knotenpunkt (XSRC),
- wenn die Instruktionen eine Sprachansage betreffen, führt der erste Knotenpunkt (XSRC) anhand der Instruktionen dem Quell-Endgerät (TSRC) eine Sprachansage zu oder wenn die Instruktionen eine Tarifierung eines Rufes an eine neue Teilnehmernummer des über die gewählte Teilnehmernummer nicht erreichbaren Zielteilnehmers betreffen, führt der erste Knotenpunkt (XSRC) die Instruktionen für eine Tarifierung aus.

2. Verfahren nach Anspruch 1, dadurch gekennzeichnet, daß die Meldenachricht in einer Auslösenachricht enthalten ist, die für das Auslösen der Verbindung (CON1, CON2) auf dem Abschnitt (CON2) von dem zweiten Knotenpunkt (XDEST) bis zu dem ersten Knotenpunkt (XSRC) von dem zweiten Knotenpunkt (XDEST) an den ersten Knotenpunkt (XSRC) versendet wird.

3. Verfahren nach Anspruch 1 oder 2, dadurch gekennzeichnet, daß die Meldenachricht eine Information enthält, daß die gewählte Teilnehmernummer nicht erreichbar ist, weil die Teilnehmernummer durch eine neue Teilnehmernummer ersetzt worden ist.

4. Verfahren nach Anspruch 1, dadurch gekennzeichnet, daß der erste Knotenpunkt (XSRC) die Sprachansage bei einer Sprachansageeinrichtung anfordert und daß die Sprachansageeinrichtung die Sprachansage dem ersten Knotenpunkt (XSRC) überträgt.

5. Knotenpunkt (XDEST) zur Beschaffung von Instruktionen über einen Zielteilnehmer in einem Telekommunikationsnetz, wobei Knotenpunkt (XDEST) Mittel zum Empfang und Mittel zum Ausführen einer Anweisung hat, mit welcher der Knotenpunkt (XDEST) dazu angewiesen wird, eine Verbindung von einem ersten Knotenpunkt (XSRC) über sich selbst hinweg zu einer Einrichtung mit einer in der Anweisung angegebenen Teilnehmernummer aufzubauen, und wobei der Knotenpunkt (XDEST) Mittel aufweist, um dann, wenn die Einrichtung über die Teilnehmernummer für den Knotenpunkt nicht mehr erreichbar ist, weil die Teilnehmernummer durch eine neue Teilnehmernummer ersetzt worden ist, dem ersten Knotenpunkt eine Meldenachricht zu senden, **dadurch gekennzeichnet**, **daß** der Knotenpunkt (XDEST) Mittel aufweist, um in die Meldenachricht eine Information einzufügen, daß die gewählte Teilnehmernummer nicht erreichbar ist, weil die Teilnehmernummer durch eine neue Teilnehmernummer ersetzt worden ist.

6. Knotenpunkt (XSRC) zur Beschaffung von Instruktionen über einen Zielteilnehmer in einem Telekommunikationsnetz, der nicht mehr über eine an einem Quell-Endgerät (TSRC) gewählte Teilnehmernummer erreichbar ist, wobei der Knotenpunkt (XSRC) Mittel hat, um bei der Wahl der Teilnehmernummer an dem Quell-Endgerät (TSRC) eine Verbindung (CON1, CON2) von diesem Quell-Endgerät (TSRC) über sich selbst hinweg zu mindestens einem zweiten Knotenpunkt (XDEST) aufzubauen, und wobei der Knotenpunkt (XSRC) mit einer intelligenten Netzwerkeinrichtung (SCP) verbindbar ist, **dadurch gekennzeichnet**,
- daß der Knotenpunkt (XSRC) Mittel zum Empfang und zum Lesen einer Meldenachricht aufweist, die von dem zweiten Knotenpunkt (XDEST) dann gesendet wird, wenn die gewünschte Teilnehmernummer über den zweiten Knotenpunkt (XDEST) nicht erreichbar ist,
- daß der Knotenpunkt (XSRC) Mittel aufweist, um nach dem Lesen der Meldenachricht an die intelligente Netzwerkeinrichtung (SCP) eine Anfrage zu senden, mit der Instruktionen bezüglich des über die gewählte Teilnehmernummer nicht erreichbaren Zielteilnehmers erfragt werden,
- daß der Knotenpunkt (XSRC) Mittel aufweist, um von der intelligenten Netzwerkeinrichtung (SCP) die erfragten Instruktionen zu empfangen,
- und daß der Knotenpunkt (XSRC) Mittel aufweist, um dann, wenn die Instruktionen eine Sprachansage betreffen, gemäß der Instruktionen dem Quell-Endgerät (TSRC) eine Sprachansage mit einem in den Instruktionen angegebenen Inhalt zuzuführen, oder daß der Knotenpunkt (XSRC) Mittel aufweist, um dann, wenn die Instruktionen eine Tarifierung eines Rufes an eine neue Teilnehmernummer des über die gewählte Teilnehmernummer nicht erreichbaren Zielteilnehmers betreffen, die Instruktionen für eine Tarifierung auszuführen.
